# EUROPÄISCHE PATENTSCHRIFT

(11) **EP 4 294 890 B1**
(45) Veröffentlichungstag und Bekanntmachung des Hinweises auf die Patenterteilung: **22.10.2025**
(21) Anmeldenummer: 22708854.9
(22) Anmeldetag: 15.02.2022
(51) Int. Cl.: C09K 19/32

(54) **FLÜSSIGKRISTALLINE VERBINDUNGEN**
LIQUID-CRYSTALLINE COMPOUNDS
COMPOSÉS CRISTALLINS LIQUIDES

(30) Priorität: 17.02.2021 DE 102021000830
(43) Veröffentlichungstag der Anmeldung: 27.12.2023
(73) Patentinhaber: Merck Patent GmbH, 64293 Darmstadt (DE)
(72) Erfinder: BREMER, Matthias, 64293 Darmstadt (DE); HAAS, Helga, 64293 Darmstadt (DE); FORTTE, Rocco, 64293 Darmstadt (DE); MICKLER, Clemens, 64293 Darmstadt (DE)
(74) Vertreter: Merck Patent Association
(86) Internationale Anmeldenummer: PCT/EP2022/053571
(87) Internationale Veröffentlichungsnummer: WO 2022/175219

(56) Entgegenhaltungen:
- DE-A1- 3 908 269
- RU-C1- 2 373 252

## Beschreibung

Die Erfindung betrifft Verbindungen der Formel I, 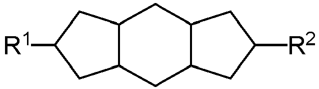 worin die Reste R¹ und R² wie nachstehend und in den Ansprüchen definiert sind (acyclische Reste wie z. B. Alkyl). Die Erfindung umfasst daneben ein Verfahren zur Herstellung der Verbindungen der Formel I, flüssigkristalline Medien enthaltend mindestens eine Verbindung der Formel I sowie ihre Verwendung als Komponente(n) in flüssigkristallinen Medien. Darüber hinaus betrifft die vorliegende Erfindung Flüssigkristall- und elektrooptische Anzeigeelemente, welche die erfindungsgemäßen, flüssigkristallinen Medien enthalten.

In den vergangenen Jahren wurden die Anwendungsgebiete für flüssigkristalline Verbindungen auf verschiedene Arten von Anzeigevorrichtungen, elektrooptische Geräte, elektronische Komponenten, Sensoren, etc. erheblich ausgeweitet. Aus diesem Grund wurden eine Reihe verschiedener Strukturen vorgeschlagen, insbesondere auf dem Gebiet der nematischen Flüssigkristalle. Die nematischen Flüssigkristallmischungen haben bisher die breiteste Anwendung in flachen Anzeigevorrichtungen gefunden. Sie wurden besonders in passiven TN- oder STN-Matrixanzeigen oder in Systemen mit einer TFT-Aktivmatrix eingesetzt.

Die erfindungsgemäßen, flüssigkristallinen Verbindungen können als Komponente(n) flüssigkristalliner Medien verwendet werden, insbesondere für Displays, die auf dem Prinzip der verdrillten Zelle, dem Guest-Host-Effekt, dem Effekt der Deformation aufgerichteter Phasen DAP oder ECB (electrically controlled birefringence), dem IPS-Effekt (in-plane switching) oder dem Effekt der dynamischen Streuung beruhen.

Flüssigkristalline Verbindungen für elektrooptische Anwendungen besitzen in der Regel eine gewisse Polarität, insbesondere eine dielektrische Anisotropie (Δε), damit sie durch elektrische Felder ausgerichtet werden können. Daneben gibt es auch verschiedene unpolare flüssigkristalline Verbindungen, die zur Verbesserung anderer Eigenschaften der flüssigkristallinen Phasen beigemischt werden. Typische unpolare Verbindungen, die häufig eingesetzt werden, besitzen beispielsweise eine der folgenden Strukturen ausgewählt aus Bicyclohexanen oder Biphenylen: 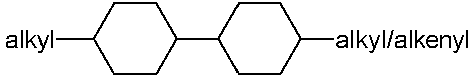 oder 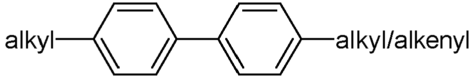 Teilhydrierte Indacenderivate der Formel 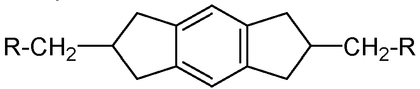 werden beschrieben in der Druckschrift DE 3908269 A1.

Ein s-Perhydroindacen der Formel 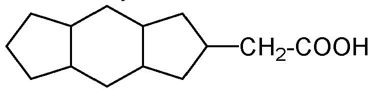 wird in der Druckschrift RU 2373252 C1 im Zusammenhang mit Hilfsmitteln zur Erdölförderung offenbart.

Der vorliegenden Erfindung lag die Aufgabe zugrunde, neue stabile Verbindungen aufzufinden, die als Komponente(n) flüssigkristalliner Medien geeignet sind. Insbesondere sollen die Verbindungen gleichzeitig eine vergleichsweise geringe Viskosität, sowie eine ausreichende Löslichkeit besitzen. Für viele aktuelle Mischungskonzepte im Bereich der Flüssigkristalle ist es vorteilhaft, Verbindungen mit einer stark positiven dielektrischen Anisotropie Δε in Kombination mit besonders niedrigviskosen Verbindungen zu verwenden, da es kaum Verbindungen mit einer idealen Kombination aus allen gewünschten Eigenschaften gibt.

Im Hinblick auf die verschiedensten Einsatzbereiche derartiger Verbindungen mit niedriger Viskosität war es wünschenswert, weitere Verbindungen bereitzustellen, die auf die jeweiligen Anwendungen genau maßgeschneiderte Eigenschaften aufweisen.

Der Erfindung lag somit als eine Aufgabe zugrunde, neue stabile Verbindungen aufzufinden, die als Komponente(n) flüssigkristalliner Medien, insbesondere für z. B. VA, PS-VA, IPS-, FFS-, TN-, STN- und TN-TFT-Displays, geeignet sind.

Darüber hinaus sollten die erfindungsgemäßen Verbindungen unter den in den Anwendungsgebieten vorherrschenden Bedingungen thermisch und photochemisch stabil sein. Als Mesogene sollten sie eine breite nematische Phase in Mischungen mit flüssigkristallinen Cokomponenten ermöglichen sowie hervorragend mit nematischen Basismischungen, insbesondere bei tiefen Temperaturen, mischbar sein. Für die meisten Anwendungen werden Verbindungen bevorzugt, welche die Bildung einer nematischen Flüssigkristallphase bei diversen Temperaturen begünstigen. Ebenso bevorzugt sind Substanzen mit einem niedrigen Schmelzpunkt und einer geringen Schmelzenthalpie, da diese Größen wiederum Anzeichen für die oben genannten wünschenswerten Eigenschaften sind, wie z. B. eine hohe Löslichkeit in Verbindung mit anderen Flüssigkristallkomponenten, eine breite flüssigkristalline Phase der Mischungen und eine geringe Neigung zur spontanen Kristallisation in Mischungen bei tiefen Temperaturen. Gerade die Löslichkeit bei tiefer Temperatur unter Vermeidung von jeglicher Kristallisation ist wichtig für den sicheren Betrieb und Transport von Anzeigen in Fahr- und Flugzeugen und im Freien.

Überraschenderweise wurde gefunden, dass die erfindungsgemäßen Verbindungen vorzüglich als Komponenten flüssigkristalliner Medien geeignet sind. Mit ihrer Hilfe lassen sich flüssigkristalline Medien für Displays erhalten, die eine geringe Viskosität und damit verbunden eine geringe Schaltzeit besitzen. Die erfindungsgemäßen Verbindungen sind hinreichend stabil und farblos. Hohe Werte für die elastischen Konstanten (K₁₁/K₂₂/K₃₃) sind außerdem von großer Bedeutung hinsichtlich geringeren Stromverbrauchs der Displays. Daraus resultieren Medien mit geringer Schaltzeit und hohem Kontrast und Anzeigen mit geringem Energieverbrauch, d. h. energiesparende Anwendung der Verbindungen. Weiterhin haben die Verbindungen einen geringeren Dampfdruck als die Bicyclohexane mit vergleichbarem Klärpunkt, so dass die Eignung entsprechender Mischungen für die Arbeit unter vermindertem Druck verbessert wird. Darunter fällt beispielsweise die Anwendung der Verbindungen in der Avionik, z. B. Anzeigen von Cockpits.

Mit der Bereitstellung der erfindungsgemäßen Verbindungen wird ganz allgemein die Palette der flüssigkristallinen Substanzen, die sich unter verschiedenen anwendungstechnischen Gesichtspunkten zur Herstellung flüssigkristalliner Mischungen eignen, erheblich verbreitert.

Die Verbindungen der Formel I besitzen einen breiten Anwendungsbereich. In der Regel werden den erfindungsgemäßen Verbindungen flüssigkristalline Basismaterialien aus anderen Verbindungsklassen zugesetzt, um beispielsweise die dielektrische und/oder die optische Anisotropie eines solchen Dielektrikums zu beeinflussen und/oder um dessen Schwellenspannung und/oder dessen Viskosität zu optimieren.

Gegenstand der Erfindung sind somit Verbindungen der Formel I, 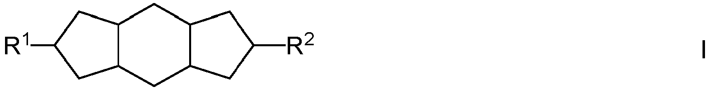 worin
R¹ und R² einen Alkylrest mit 1 bis 15 C-Atomen, wobei in diesem Rest auch eine oder mehrere CH₂-Gruppen, einschließlich endständiger C-Atome, jeweils unabhängig voneinander durch -C=C-, -CH=CH-, 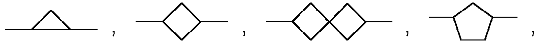 -O-, -S-, -CO-O- oder -O-CO- so ersetzt sein können, dass O/S-Atome nicht direkt miteinander verknüpft sind, und worin auch ein oder mehrere H-Atome durch Halogen ersetzt sein können,
bevorzugt
R² einen Alkylrest mit 1 bis 15 C-Atomen, wobei in diesem Rest auch eine oder mehrere CH₂-Gruppen, einschließlich endständiger C-Atome, jeweils unabhängig voneinander durch -C≡C-, -CH=CH-, 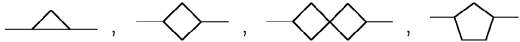 , -O-, -S-, -CO-O- oder -O-CO- so ersetzt sein können, dass O/S-Atome nicht direkt miteinander verknüpft sind, und worin auch ein oder mehrere H-Atome durch Halogen ersetzt sein können,
bedeuten.

Gegenstand der Erfindung ist weiterhin die Verwendung der Verbindungen der Formel I in flüssigkristallinen Medien.

Ebenfalls Gegenstand der vorliegenden Erfindung sind flüssigkristalline Medien mit mindestens zwei flüssigkristallinen Komponenten, welche mindestens eine Verbindung der Formel I enthalten.

Die Verbindungen der Formel I umfassen als Strukturelement ein Perhydro-s-indacen. Die Verbindungen der Formel I sind in reinem Zustand farblos und bilden für sich oder in Mischungen flüssigkristalline Mesophasen in einem für die elektrooptische Verwendung günstig gelegenen Temperaturbereich. Mit den erfindungsgemäßen Verbindungen lassen sich breite nematischen Phasenbereiche erzielen. In flüssigkristallinen Mischungen verringern die erfindungsgemäßen Substanzen die Rotationsviskosität deutlich. Gleichzeitig zeichnen sich die Verbindungen durch gute UV-Stabilität aus.

Der Rest R¹ der Formel I und ihrer Unterformeln bedeutet bevorzugt Alkyl oder Alkenyl mit bis zu 8 Kohlenstoffatomen. R¹ bedeutet besonders bevorzugt einen geradkettigen Alkylrest mit 1 bis 7 C-Atomen oder einen unverzweigten Alkenylrest mit 2 bis 8 C-Atomen, insbesondere unverzweigtes Alkyl mit 2 bis 7 C-Atomen.

Aus Gründen der einfachen Synthese ist es bevorzugt, dass die Reste R¹ und R² identisch sind. Im Rahmen der anwendungstechnischen Eigenschaften, wie z. B. ein niedriger Schmelzpunkt, ist es bevorzugt, dass die beiden Reste R¹ und R² verschieden sind. Zum Beispiel können sie aus linearen Alkylresten mit unterschiedlicher Anzahl von C-Atomen bestehen.

Verbindungen der Formel I mit verzweigten oder substituierten Flügelgruppen R¹ können gelegentlich wegen einer besseren Löslichkeit in den üblichen flüssigkristallinen Basismaterialien von Bedeutung sein. Bevorzugt ist die Gruppe R¹ geradkettig.

Der Rest R¹ ist besonders bevorzugt ausgewählt aus den Teilstrukturen:

-CH₃

-C₂H₅

-C₃H₇

-C₄H₉

-C₅H₁₁

-C₆H₁₃

-CH=CH₂

-CH=CH₂-CH₃

-CH₂-CH=CH₂

-CH₂-CH=CH-CH₃

-CH₂-CH₂-CH=CH₂

-CH₂-CH₂-CH=CH-CH₃

worin die Alkylketten vorzugsweise unverzweigt sind (n-Alkyl).

Alternative Reste R¹ sind ausgewählt aus Cyclopentyl, 2-Fluor-ethyl, Cyclopropyl-methyl, Cyclopentyl-methyl, Cyclobutyl-methyl, 2-Methylcyclopropyl und 2-Methyl-cyclobutyl.

Besonders bevorzugt bedeutet die Endgruppe R¹ Methyl, Ethyl, n-Propyl, n-Butyl oder n-Pentyl. Die Endgruppe R² bedeutet unabhängig davon besonders bevorzugt Ethyl, n-Propyl, n-Butyl oder n-Pentyl.

Ausgewählte Verbindungen der Formel I sind die Verbindungen der folgenden Formeln I-1 bis I-25:

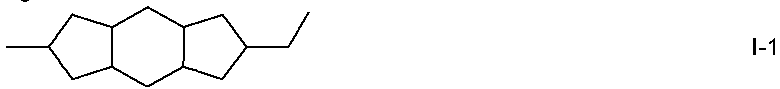

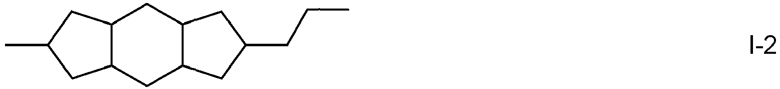

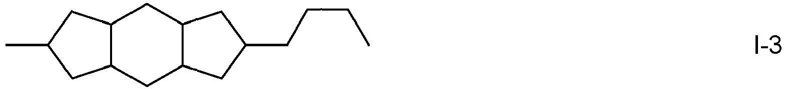

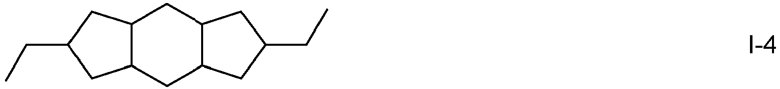

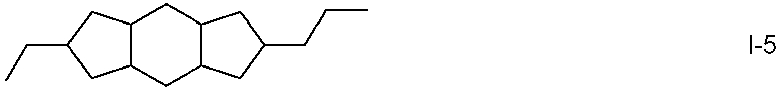

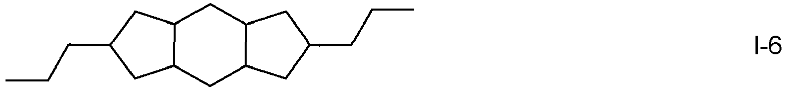

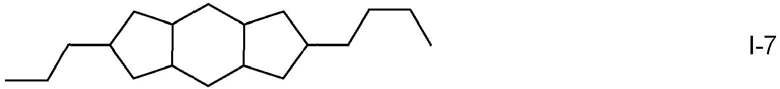

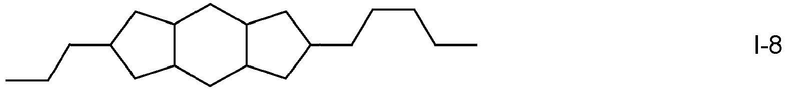

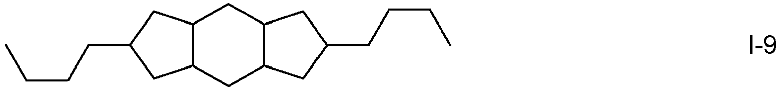

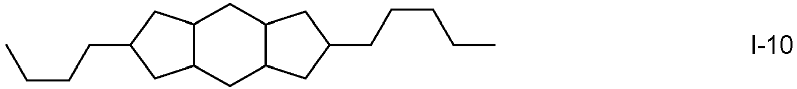

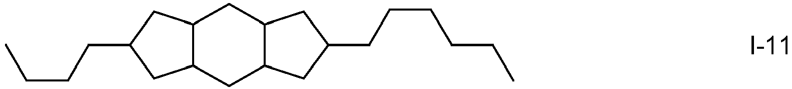

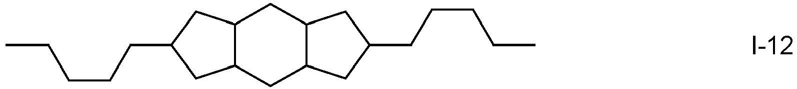

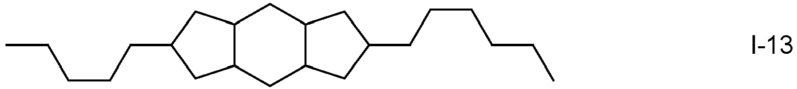

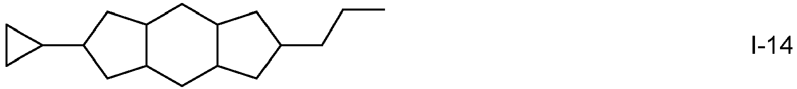

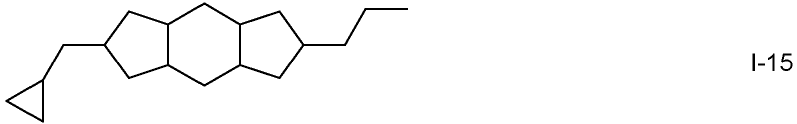

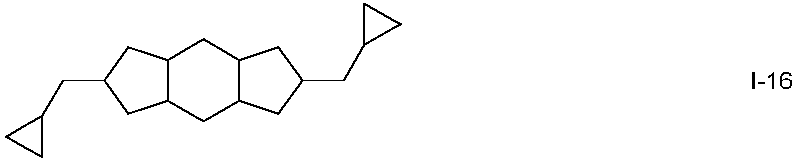

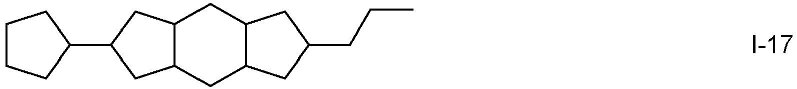

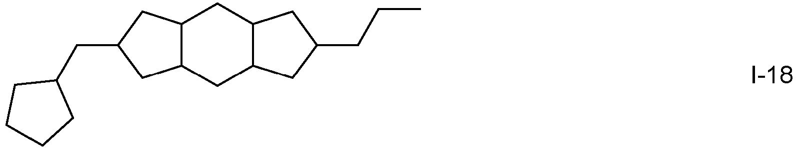

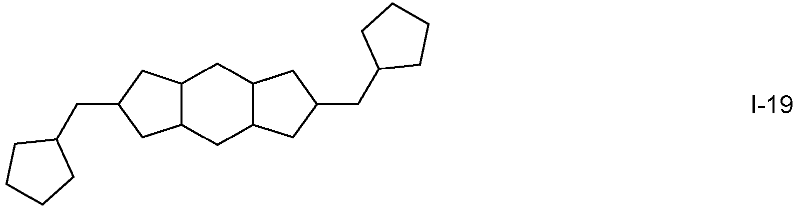

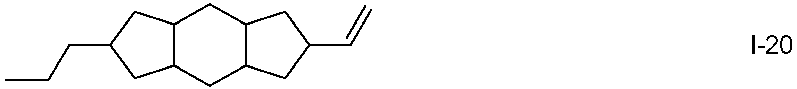

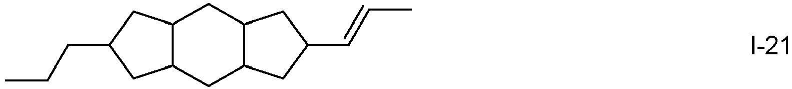

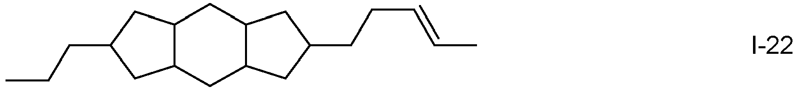

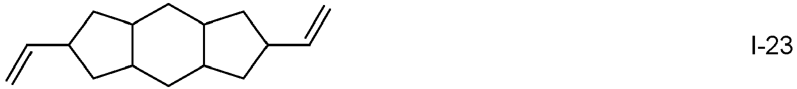

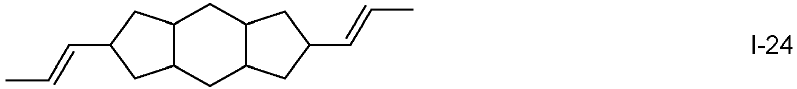

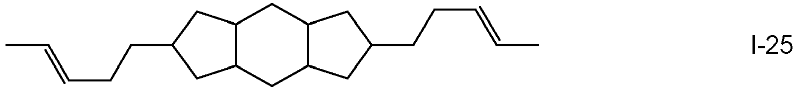

Unter den Verbindungen der Formeln I-1 bis I-25 sind die Verbindungen der Formeln I-1 bis I-13 und insbesondere der Formeln I-4, I-5, I-6, I-7 und 1-9 bevorzugt.

Bevorzugte stereochemische Konfigurationen der Verbindungen sind die Folgenden: 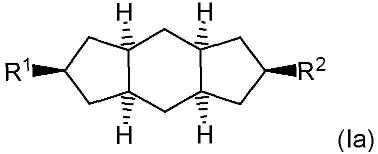 worin der Cyclohexanring in der Wannenkonformation vorliegt, und 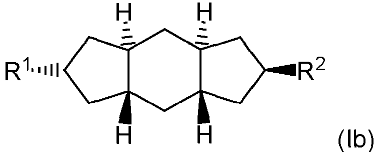 worin der Cyclohexanring in der Sesselkonformation vorliegt. Die Reste R¹ und R² haben die für Formel I angegebenen Bedeutungen, bzw. die engeren Bedeutungen oder sie sind ausgewählt aus den Resten wie in den Formeln I-1 bis I-43.

Die Verbindungen der Formel I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind und zwar unter Reaktionsbedingungen, die für die genannten Umsetzungen bekannt und geeignet sind. Dabei kann man auch von an sich bekannten, hier nicht näher erwähnten Varianten Gebrauch machen.

Verbindungen der Formel I können vorteilhafterweise wie an der folgenden beispielhaften Synthese und den Beispielen ersichtlich hergestellt werden (Schema 1 bis 3):

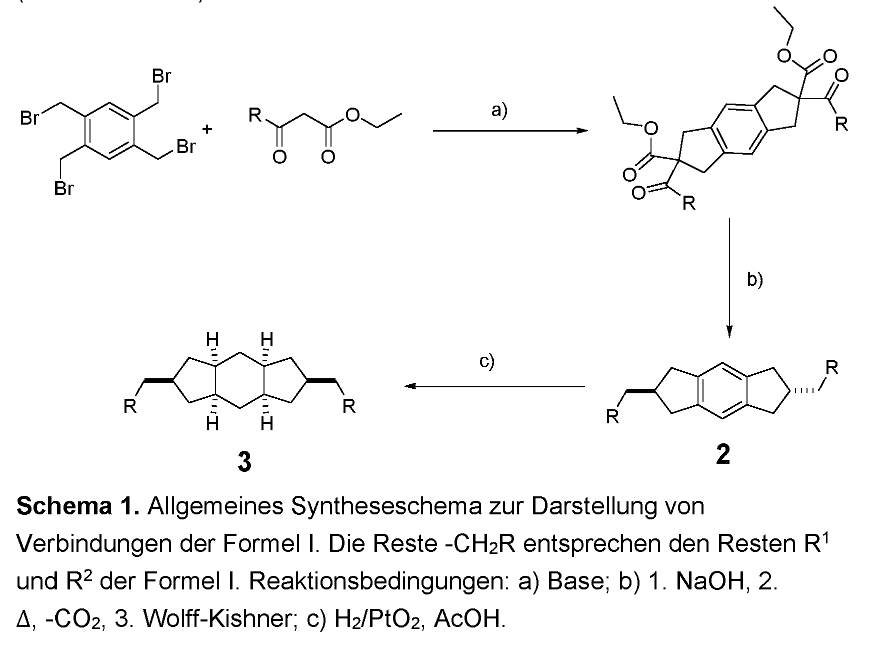

Durch Abwandlung der Hydrierung des Benzolrings in zwei selektive Hydrierungen sind die Isomere **5** zugänglich (Schema 2).

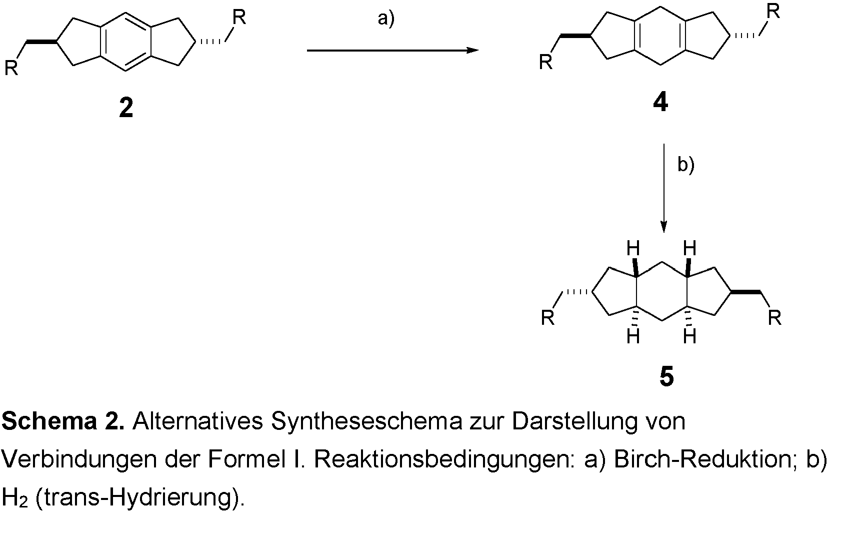

Die Verbindung **2** wird erst mittels Birch-Reduktion zum Cyclohexadien reduziert, und anschließend trans-selektiv hydriert. Dazu eignen sich beispielsweise homogene Übergangsmetall-Katalysatoren (Wilkinson-Katalysator und ähnliche).

Durch Abwandlung der Synthese der Seitengruppen aus Schema 1 ergibt sich alternativ das Syntheseschema 3 zur Herstellung von entsprechenden Alkoxyverbindungen (nicht beansprucht).

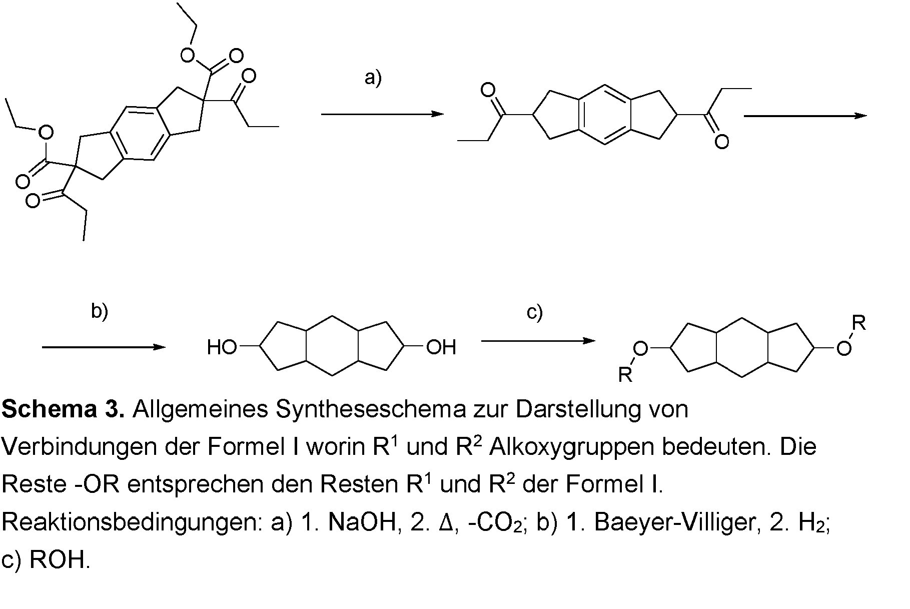

Entsprechende Ausgangsprodukte lassen sich in der Regel vom Fachmann ohne Weiteres über literaturbekannte Synthesemethoden herstellen oder sind kommerziell erhältlich.

Anstelle des skizzierten heterogenen Platinkatalysators können alternativ trans-selektive Hydrierkatalysatoren eingesetzt werden, um zu anderen Isomeren der Formel I zu gelangen.

Die Erfindung hat auch ein Verfahren zur Herstellung von Verbindungen der Formel I zum Gegenstand wobei eine Verbindung der Formel II 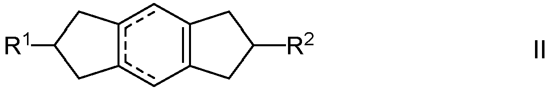
worin R¹ und R² wie für Formel I definiert sind,
durch Hydrierung der Doppelbindungen des sechsgliedrigen Rings im Ringsystem der Formel II an einem Metallkatalysator zu einer Verbindung der Formel I umgesetzt wird, 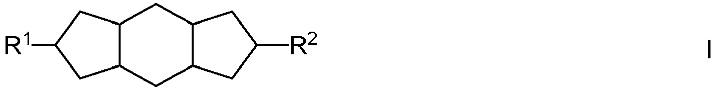
worin die Gruppen wie vorangehend definiert sind.

Die Formel II steht für die Verbindungen der folgenden Formeln IIa oder IIb:

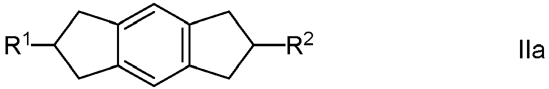

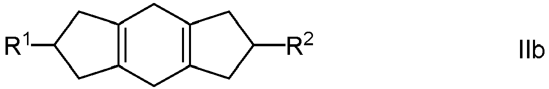

Zur katalytischen Reaktion von Verbindung II zum Produkt der Formel I wird die Verbindung II vorzugsweise in einer flüssigen Phase gelöst und in Gegenwart des Katalysators mit Wasserstoff zur Reaktion gebracht. Derartige Hydrierungen von C-C-Doppelbindungen an einem heterogenen oder homogen gelösten Katalysator sind dem Fachmann vertraut. Als Katalysatoren kommen vor allem Platin, Rhodium und Palladium und ihre Verbindungen in Frage. Die aromatischen Verbindungen der Formel IIa werden vorzugsweise an einem geeigneten Platinkatalysator auf einem Trägermaterial hydriert. Alternativ kann eine Verbindung der Formel IIa auch zuerst einer Birch-Reduktion an Natrium oder Lithium unterworfen werden, um zu Dien-Verbindungen der Formel IIb zu gelangen. Die Verbindungen der Formel IIb sind relativ leicht hydrierbar, z. B. bei Normaldruck an Wilkinson-Katalysator. Alternativ kann die Reduktion durch Protonierung (z.B. mit Trifluoressigsäure) in Gegenwart einer Hydridquelle (z.B. Trialkylsilan) durchgeführt werden.

Die verwendeten Reaktionsmethoden und Reagenzien sind prinzipiell literaturbekannt. Weitere Reaktionsbedingungen können den Ausführungsbeispielen entnommen werden.

Weitere, vorangehend nicht genannte, bevorzugte Verfahrensvarianten lassen sich den Beispielen oder den Ansprüchen entnehmen.

Das Verfahren und die anschließende Aufarbeitung des Reaktionsgemisches kann grundsätzlich als Batch-Reaktion oder in kontinuierlicher Reaktionsweise durchgeführt werden. Die kontinuierliche Reaktionsweise umfasst z. B. die Reaktion in einem kontinuierlichen Rührkesselreaktor, einer Rührkesselkaskade, einem Schlaufen- oder Querstromreaktor, einem Strömungsrohr oder in einem Mikroreaktor. Die Aufarbeitung der Reaktionsgemische erfolgt wahlweise, je nach Bedarf, durch Filtration über feste Phasen, Chromatographie, Separation zwischen unmischbaren Phasen (z. B. Extraktion), Adsorption an festen Trägern, Abdestillieren von Lösungsmitteln und/oder azeotropen Gemischen, selektive Destillation, Sublimation, Kristallisation, Cokristallisation oder durch Nanofiltration an Membranen.

Gegenstand der Erfindung sind auch flüssigkristalline Medien enthaltend eine oder mehrere der erfindungsgemäßen Verbindungen der Formel I. Die flüssigkristallinen Medien enthalten wenigstens zwei Komponenten. Man erhält sie vorzugsweise indem man die Komponenten miteinander vermischt. Ein erfindungsgemäßes Verfahren zur Herstellung eines flüssigkristallinen Mediums ist daher dadurch gekennzeichnet, dass man mindestens eine Verbindung der Formel I mit mindestens einer weiteren mesogenen Verbindung vermischt und gegebenenfalls Additive zugibt.

Die erzielbaren Kombinationen aus Klärpunkt, Viskosität bei tiefer Temperatur, thermischer/UV-Stabilität, dielektrischer Anisotropie, Schaltzeit und Kontrast übertreffen bei weitem bisherige Materialien aus dem Stand der Technik.

Die erfindungsgemäßen, flüssigkristallinen Medien enthalten vorzugsweise neben einer oder mehreren erfindungsgemäßen Verbindungen als weitere Bestandteile 2 bis 40, besonders bevorzugt 4 bis 30 Komponenten. Insbesondere enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Azoxybenzole, Benzylidenaniline, Biphenyle, Terphenyle, Phenyl- oder Cyclohexylbenzoate, Cyclohexancarbonsäure-phenyl- oder cyclohexylester, Phenyl- oder Cyclohexylester der Cyclohexylbenzoesäure, Phenyl- oder Cyclohexylester der Cyclohexylcyclohexancarbonsäure, Cyclohexylphenylester der Benzoesäure, der Cyclohexancarbonsäure bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexylcyclohexane, 1,4-Bis-cyclohexylbenzole, 4,4'-Bis-cyclohexylbiphenyle, Phenyl- oder Cyclohexylpyrimidine, Phenyl- oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenyl-cyclohexyl)-ethane, 1-Cyclohexyl-2-biphenylethane, 1-Phenyl-2-cyclohexyl-phenylethane, gegebenenfalls halogenierten Stilbene, Benzylphenylether, Tolane und substituierten Zimtsäuren. Die 1,4-Phenylengruppen in diesen Verbindungen können auch fluoriert sein.

Die wichtigsten als weitere Bestandteile der erfindungsgemäßen Medien in Frage kommenden Verbindungen lassen sich durch die Formeln 1, 2, 3, 4 und 5 charakterisieren:

R'-L-E-R" 1

R'-L-COO-E-R" 2

R'-L-CF₂O-E-R" 3

R'-L-CH₂CH₂-E-R" 4

R'-L-C≡C-E-R" 5

In den Formeln 1, 2, 3, 4 und 5 bedeuten L und E, die gleich oder verschieden sein können, jeweils unabhängig voneinander einen bivalenten Rest aus der aus den Strukturelementen -Phe-, -Cyc-, -Phe-Phe-, -Phe-Cyc-, -Cyc-Cyc-, -Pyr-, -Dio-, -Py-, -G-Phe-, -G-Cyc- und deren Spiegelbildern gebildeten Gruppe, wobei Phe unsubstituiertes oder durch Fluor substituiertes 1,4-Phenylen, Cyc trans-1,4-Cyclohexylen, Pyr Pyrimidin-2,5-diyl oder Pyridin-2,5-diyl, Dio 1,3-Dioxan-2,5-diyl, Py Tetrahydropyran-2,5-diyl und G 2-(trans-1,4-Cyclohexyl)-ethyl bedeuten.

Vorzugsweise ist einer der Reste L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe, Py und Pyr und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und/oder R" bedeuten jeweils unabhängig voneinander Alkyl, Alkenyl, Alkoxy, Alkoxyalkyl, Alkenyloxy oder Alkanoyloxy mit bis zu 8 C-Atomen, -F, -Cl, -CN, -NCS oder -(O)ᵢCH₃₋ₖFₖ, wobei i 0 oder 1 und k 1, 2 oder 3 ist.

R' und R" bedeuten in einer kleineren Untergruppe der Verbindungen der Formeln 1, 2, 3, 4 und 5 jeweils unabhängig voneinander Alkyl, Alkenyl, Alkoxy, Alkoxyalkyl, Alkenyloxy oder Alkanoyloxy mit bis zu 8 C-Atomen. Im Folgenden wird diese kleinere Untergruppe Gruppe A genannt und die Verbindungen werden mit den Teilformeln 1a, 2a, 3a, 4a und 5a bezeichnet. Bei den meisten dieser Verbindungen sind R' und R" voneinander verschieden, wobei einer dieser Reste meist Alkyl, Alkenyl, Alkoxy oder Alkoxyalkyl ist.

In einer anderen als Gruppe B bezeichneten kleineren Untergruppe der Verbindungen der Formeln (II), (III), (IV), (V) und (VI) bedeutet E

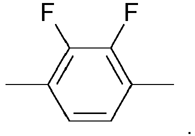

In den Verbindungen der Gruppe B, die mit den Teilformeln (IIb), (IIIb), (IVb), (Vb) und (VIb) bezeichnet werden, haben R' und R" die bei den Verbindungen der Teilformeln (IIa) bis (Vla) angegebene Bedeutung und sind vorzugsweise Alkyl, Alkenyl, Alkoxy oder Alkoxyalkyl (Oxaalkyl).

In den Verbindungen der Teilformeln 1b, 2b, 3b, 4b und 5b hat R' die bei den Verbindungen der Teilformeln 1a bis 5a angegebenen Bedeutungen und ist vorzugsweise Alkyl, Alkenyl, Alkoxy oder Alkoxyalkyl.

In einer weiteren kleineren Untergruppe der Verbindungen der Formeln 1, 2, 3, 4 und 5 bedeutet R" -F, -Cl, -NCS oder -(O)ᵢCH₃₋ₖFₖ, wobei i 0 oder 1 und k 1, 2 oder 3 ist. Diese Untergruppe wird im Folgenden als Gruppe C bezeichnet. Die Verbindungen, in denen R" diese Bedeutung hat, werden mit den Teilformeln 1c, 2c, 3c, 4c und 5c bezeichnet. Besonders bevorzugt sind solche Verbindungen der Teilformeln 1c, 2c, 3c, 4c und 5c in denen R" die Bedeutung -F, -Cl, -NCS, -CF₃, -OCHF₂ oder -OCF₃ hat. In den Verbindungen der Teilformeln 1c, 2c, 3c, 4c und 5c hat R' die bei den Verbindungen der Teilformeln 1a bis 5a angegebenen Bedeutungen und ist vorzugsweise Alkyl, Alkoxy oder Alkenyl.

Neben den bevorzugten Verbindungen der Gruppen A, B und C sind auch andere Verbindungen der Formeln 1, 2, 3, 4 und 5 mit anderen Varianten der vorgesehenen Substituenten gebräuchlich. Alle diese Substanzen sind nach literaturbekannten Methoden oder in Analogie dazu erhältlich.

Die erfindungsgemäßen Medien enthalten neben erfindungsgemäßen Verbindungen der Formel I vorzugsweise eine oder mehrere Verbindungen, welche ausgewählt werden aus den Gruppen A, B und/oder C. Die Massenanteile der Verbindungen aus diesen Gruppen in den erfindungsgemäßen Medien sind vorzugsweise:

| | |
|---|---|
| Gruppe A: | 0 bis 90 %, vorzugsweise 20 bis 90 %, besonders bevorzugt 30 bis 90 %; |
| Gruppe B: | 0 bis 80 %, vorzugsweise 10 bis 80 %, besonders bevorzugt 10 bis 65 %; |
| Gruppe C: | 0 bis 80 %, vorzugsweise 0 bis 60 %, besonders bevorzugt 0 bis 50 %; |

wobei die Summe der Massenanteile der in den jeweiligen erfindungsgemäßen Medien enthaltenen Verbindungen aus den Gruppen A, B und/oder C vorzugsweise 5 bis 90 % und besonders bevorzugt 10 bis 90 % beträgt.

Die erfindungsgemäßen Medien enthalten vorzugsweise 1 bis 40 %, besonders bevorzugt 3 bis 30 %, der erfindungsgemäßen Verbindungen.

Die Herstellung der erfindungsgemäßen Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, vorzugsweise bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Weiterhin ist es möglich, die Mischungen auf andere herkömmliche Arten, z. B. durch Verwendung von Vormischungen, z.B. Homologen-Mischungen oder unter Verwendung von sogenannten "Multi-Bottle"-Systemen herzustellen.

Die Dielektrika können auch weitere, dem Fachmann bekannte und in der Literatur beschriebene Zusätze enthalten. Beispielsweise können 0 bis 15 %, vorzugsweise 0 bis 10 %, pleochroitische Farbstoffe, chirale Dotierstoffe, Stabilisatoren oder Nanopartikel zugesetzt werden. Die einzelnen zugesetzten Verbindungen werden in Konzentrationen von 0,01 bis 6 %, vorzugsweise von 0,1 bis 3 %, eingesetzt. Dabei werden jedoch die Konzentrationsangaben der übrigen Bestandteile der Flüssigkristallmischungen also der flüssigkristallinen oder mesogenen Verbindungen, ohne Berücksichtigung der Konzentration dieser Zusatzstoffe angegeben. Die erfindungsgemäßen Flüssigkristallmischungen ermöglichen eine bedeutende Erweiterung des zur Verfügung stehenden Parameterraumes.

Gegenstand der Erfindung sind auch elektrooptische Anzeigen (insbesondere TFT-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Der Ausdruck "Alkyl" umfasst unverzweigte und verzweigte Alkylgruppen mit 1-15 Kohlenstoffatomen, insbesondere die unverzweigten Gruppen Methyl, Ethyl, n-Propyl, n-Butyl, n-Pentyl, n-Hexyl und n-Heptyl. Gruppen mit 2-5 Kohlenstoffatomen sind im allgemeinen bevorzugt.

Der Ausdruck "Alkenyl" umfasst unverzweigte und verzweigte Alkenylgruppen mit bis zu 15 Kohlenstoffatomen, insbesondere die unverzweigten Gruppen. Besonders bevorzugte Alkenylgruppen sind C₂₋C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Halogen" bedeutet in der vorliegenden Offenbarung bevorzugt Fluor oder Chlor, besonders bevorzugt Fluor.

Der Aufbau der erfindungsgemäßen Matrix-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der Matrix-Anzeige, insbesondere auch Matrix-Anzeigeelemente auf Basis von poly-Si TFT.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die folgenden Beispiele erläutern die Erfindung, ohne sie begrenzen zu sollen. Der Fachmann wird in der Lage sein, den Beispielen Details zur Durchführung zu entnehmen, die in der allgemeinen Beschreibung nicht im Einzelnen aufgeführt sind, sie nach allgemeinen Fachkenntnissen zu verallgemeinern und auf eine spezielle Problemstellung anzuwenden.

Vor- und nachstehend bedeuten Prozentangaben Gewichtsprozent. Alle Temperaturen sind in Grad Celsius angegeben. Ferner bedeuten K = kristalliner Zustand, N = nematische Phase, Sm = smektische Phase (spezieller SmA, SmB, etc.), Tg = Glaspunkt und I = isotrope Phase. Die Angaben zwischen diesen Symbolen stellen die Übergangstemperaturen dar. Δn bedeutet optische Anisotropie (589 nm, 20 °C), Δε die dielektrische Anisotropie (1kHz, 20 °C) und γ₁ die Rotationsviskosität (20°C; in der Einheit mPa·s).

Die Bestimmung physikalischer, physikochemischer beziehungsweise elektrooptischer Parameter erfolgt nach allgemein bekannten Verfahren, wie sie unter anderem beschrieben sind in der Broschüre "Merck Liquid Crystals - Licristal® - Physical Properties of Liquid Crystals - Description of the Measurements Methods", 1998, Merck KGaA, Darmstadt.

Die dielektrische Anisotropie Δε der einzelnen Substanzen wird bei 20 °C und 1 kHz bestimmt. Dazu werden 5-10 Gew.% der zu untersuchenden Substanz in der dielektrisch positiven Mischung ZLI-4792 (Merck KGaA) gelöst gemessen und der Messwert auf eine Konzentration von 100 % extrapoliert. Die optische Anisotropie Δn wird bei 20°C und einer Wellenlänge von 589,3 nm bestimmt, die Rotationsviskosität γ₁ bei 20°C, beide ebenfalls durch lineare Extrapolation.

In der vorliegenden Anmeldung, bedeutet, wenn nicht ausdrücklich anders angegeben, die Pluralform eines Begriffs sowohl die Singularform als auch die Pluralform, und umgekehrt. Weitere Kombinationen der Ausführungsformen und Varianten der Erfindung gemäß der Beschreibung ergeben sich auch aus den angefügten Ansprüchen oder aus Kombinationen von mehreren dieser Ansprüche.

### Beispiele

Die vorliegende Erfindung wird durch die nachfolgenden nicht einschränkenden Beispiele detailliert beschrieben.

### Beispiel 1: 2,6-Dipropyl-perhydro-s-indacen (1)

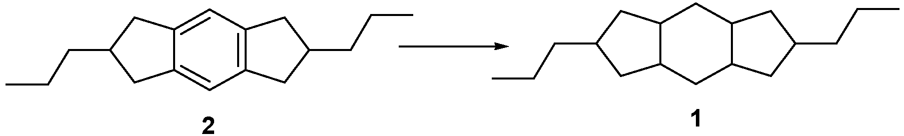

2 g 2,6-Dipropyl-1,2,3,5,6,7-hexahydro-s-indacen **2** werden in 20 ml Eisessig gelöst, mit 0.8 g Platin(IV)oxid-Hydrat versetzt und über Nacht bei Raumtemperatur und Normaldruck in einer Wasserstoffatmosphäre gerührt. Nach dem üblichen Aufarbeiten erhält man 500 mg **1.**

Analytik: ¹³C NMR (101 MHz, Chloroform-*d*) δ 14.47 (CH₃), 21.92 (CH₂-CH₃), 34.31 (Cyclohexyl-CH₂), 37.89 (Cyclohexyl-CH, CH₃CH₂CH₂), 40.19 (Cyclopentyl-CH₂), 41.10 (Cyclopentyl-CH).

### Einkristall-Röntgenstruktur-Analyse:

Triklin, Raumgruppe P-1; a = 5.4760(8) Å, b = 8.6114(16) Å, c = 9.4038(19) Å, a =110.420(18)°, b= 102.127(15)°, g=102.387(14)°

Die erhaltene Verbindung ist stereochemisch einheitlich und ist ein gestrecktes Isomer, in dessen Konfiguration der Cyclohexanring die Wannenform annimmt.

Die Verbindung zeigt folgendes Phasenverhalten:
K 51 SmB 55 I.
Δε: -2,0
Δn: 0,019
γ₁ : 21 mPa s

Analog werden hergestellt:

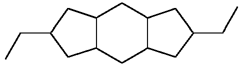

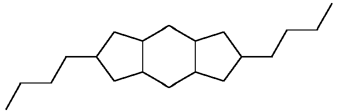

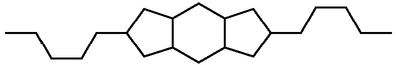

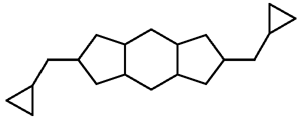

## Patentansprüche

1. Verbindungen der Formel I, 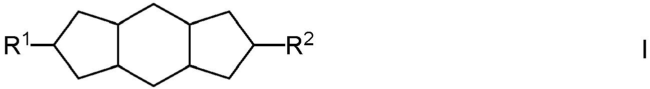 worin
R¹, R² jeweils unabhängig, Alkyl mit bis zu 8 Kohlenstoffatomen, wobei in diesen Resten auch eine oder mehrere CH₂-Gruppen, einschließlich endständiger C-Atome, jeweils unabhängig voneinander durch -CH=CH-, 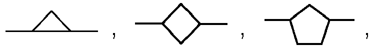 ersetzt sein können, und worin auch ein oder mehrere H-Atome durch Halogen ersetzt sein können,
bedeuten.

2. Verbindungen nach Anspruch 1, **dadurch gekennzeichnet, dass**
R¹ Alkyl oder Alkenyl mit bis zu 8 Kohlenstoffatomen
bedeutet.

3. Verbindungen nach einem oder mehreren der Ansprüche 1 oder 2, **dadurch gekennzeichnet, dass** R¹ und R² identisch sind.

4. Verbindungen nach einem oder mehreren der Ansprüche 1 oder 2, **dadurch gekennzeichnet, dass** R¹ und R² nicht identisch sind.

5. Verbindungen nach einem oder mehreren der Ansprüche 1 bis 4, **dadurch gekennzeichnet, dass** R¹ Methyl, Ethyl, n-Propyl, n-Butyl oder n-Pentyl bedeutet.

6. Verbindungen nach einem oder mehreren der Ansprüche 1 bis 5, **dadurch gekennzeichnet, dass** R² Ethyl, n-Propyl, n-Butyl oder n-Pentyl bedeutet.

7. Verbindungen nach einem oder mehreren der Ansprüche 1 bis 6 ausgewählt aus den folgenden Formeln:

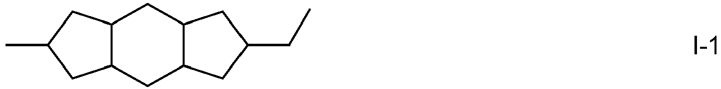

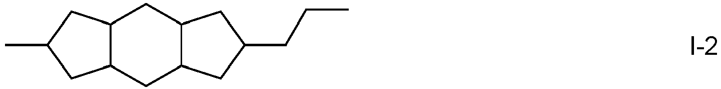

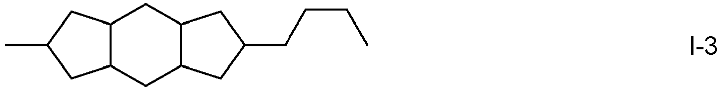

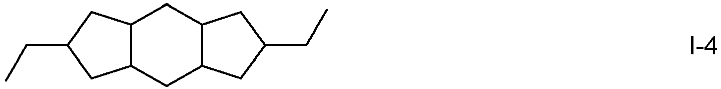

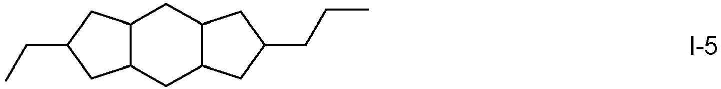

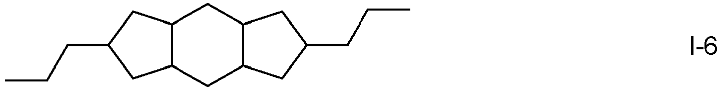

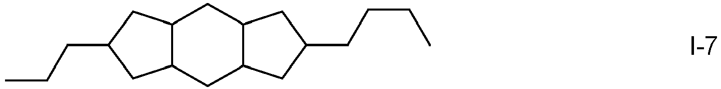

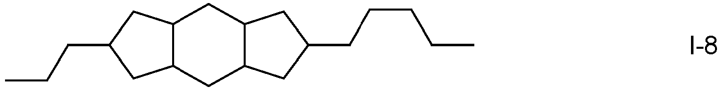

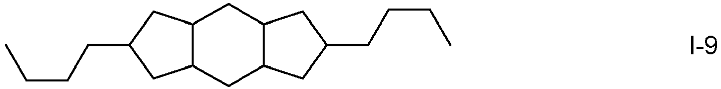

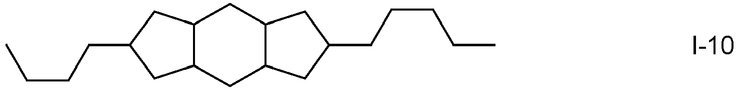

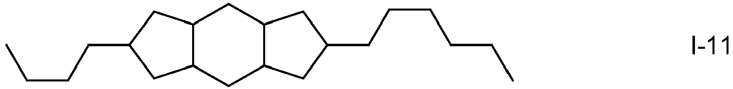

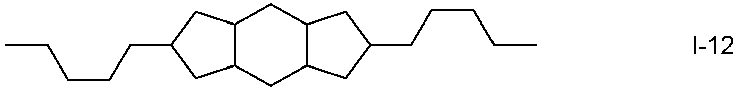

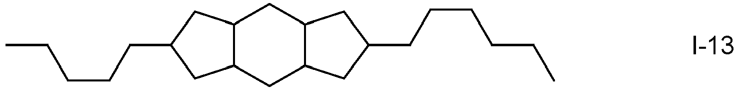

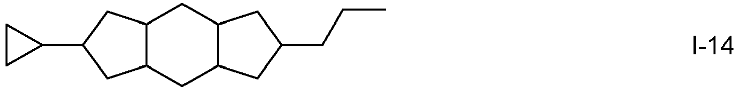

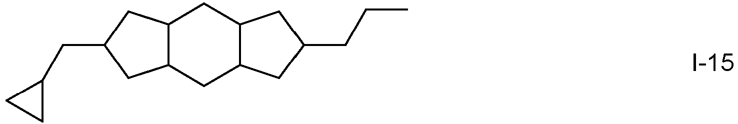

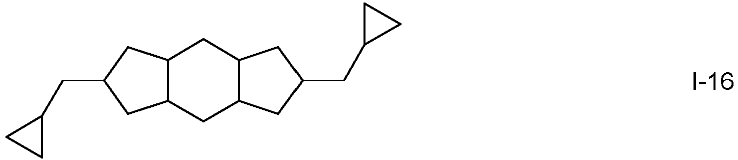

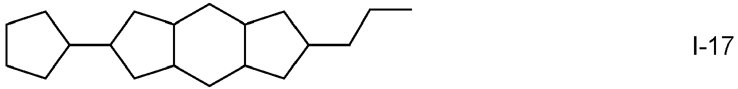

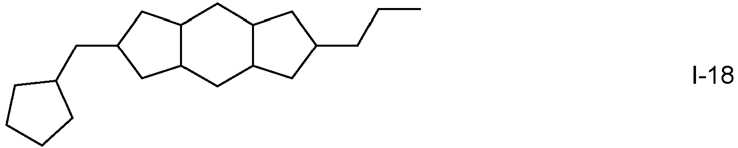

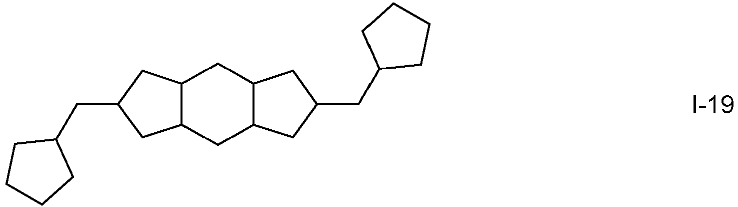

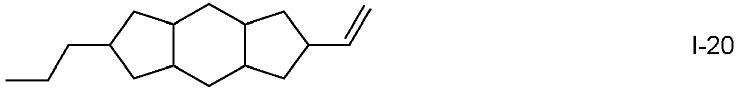

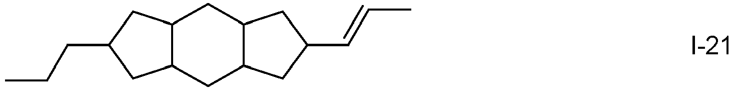

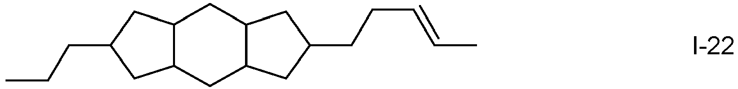

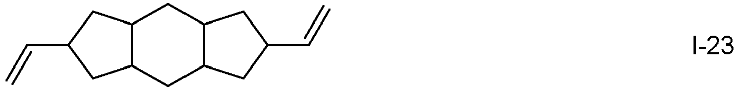

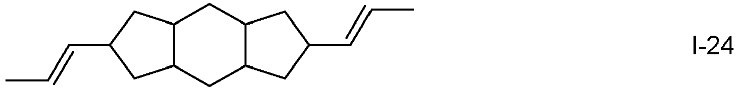

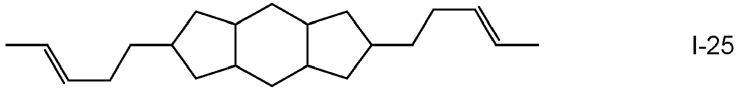

8. Verfahren zur Herstellung von Verbindungen der Formel I nach einem oder mehreren der Ansprüche 1 bis 7, wobei eine Verbindung der Formel II 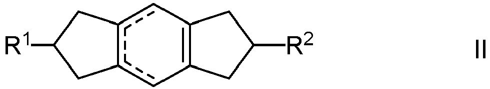
worin R¹ und R² wie für Formel I in Anspruch 1 definiert sind,
durch Hydrierung der Doppelbindungen des sechsgliedrigen Rings im Ringsystem der Formel II an einem Metallkatalysator zu einer Verbindung der Formel I
umgesetzt wird.

9. Verwendung einer oder mehrerer Verbindungen der Formel I nach einem oder mehreren der Ansprüche 1 bis 7 als Komponente in einem flüssigkristallinen Medium.

10. Flüssigkristallines Medium enthaltend mindestens zwei mesogene Verbindungen, **dadurch gekennzeichnet, dass** es mindestens eine Verbindung der Formel I nach einem oder mehreren der Ansprüche 1 bis 7 enthält.

11. Verwendung des flüssigkristallinen Mediums nach Anspruch 10 für elektrooptische Zwecke.

12. Verwendung des flüssigkristallinen Mediums nach Anspruch 10 für energiesparende Anwendungen.

13. Elektrooptische Flüssigkristallanzeige enthaltend ein flüssigkristallines Medium nach Anspruch 10.

## Claims

1. Compounds of the formula I, 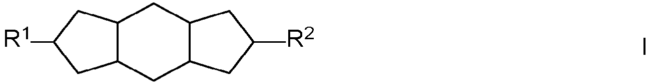 in which
R¹, R², in each case independently, denote alkyl having up to 8 carbon atoms, where, in addition, one or more CH₂ groups in these radicals, including terminal C atoms, may in each case, independently of one another, be replaced by -CH=CH-, 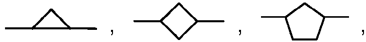 and in which, in addition, one or more H atoms may be replaced by halogen.

2. Compounds according to Claim 1, **characterised in that**
R¹ denotes alkyl or alkenyl having up to 8 carbon atoms.

3. Compounds according to one or more of Claims 1 or 2, **characterised in that** R¹ and R² are identical.

4. Compounds according to one or more of Claims 1 or 2, **characterised in that** R¹ and R² are not identical.

5. Compounds according to one or more of Claims 1 to 4, **characterised in that** R¹ denotes methyl, ethyl, n-propyl, n-butyl or n-pentyl.

6. Compounds according to one or more of Claims 1 to 5, **characterised in that** R² denotes ethyl, n-propyl, n-butyl or n-pentyl.

7. Compounds according to one or more of Claims 1 to 6 selected from the following formulae:

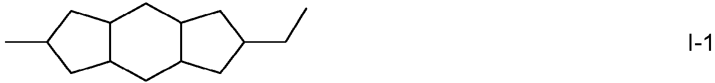

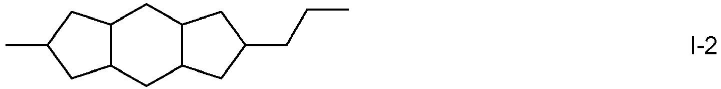

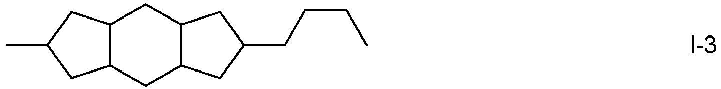

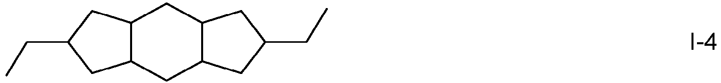

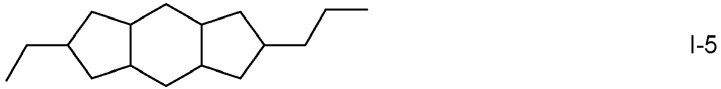

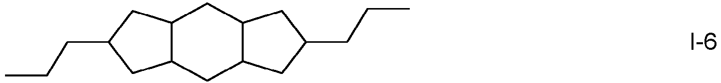

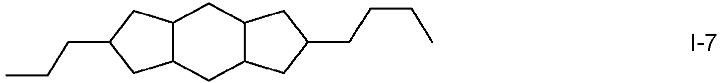

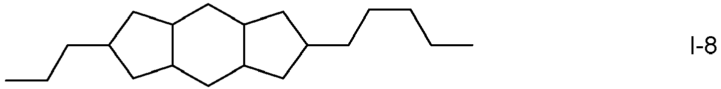

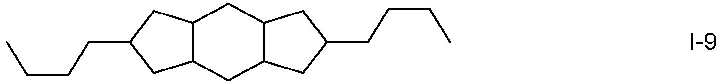

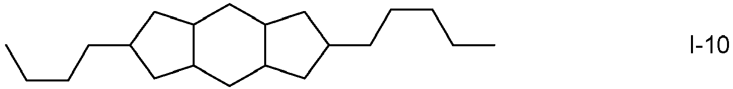

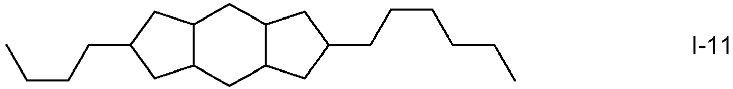

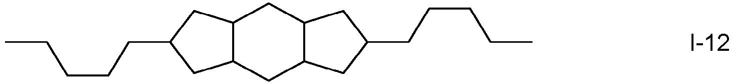

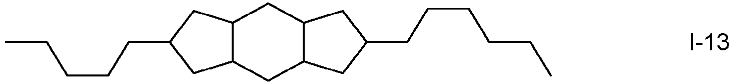

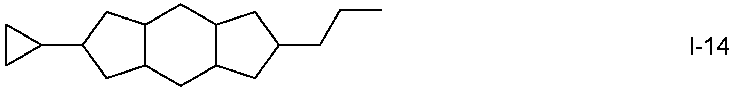

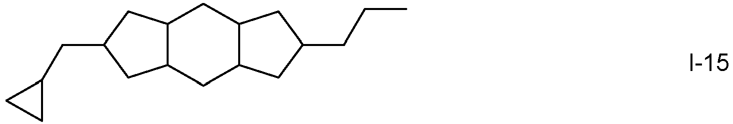

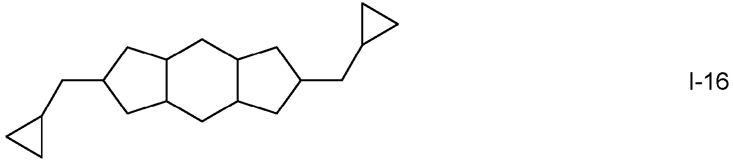

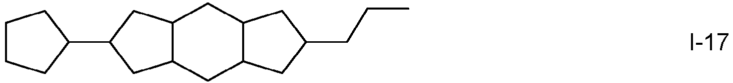

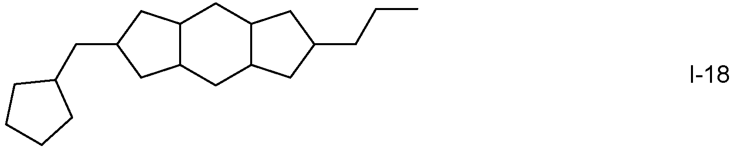

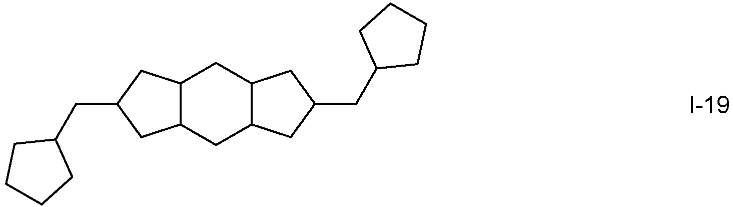

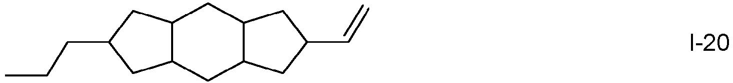

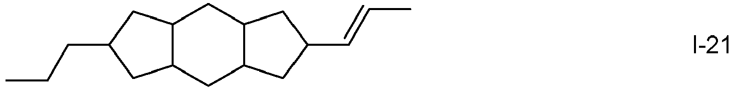

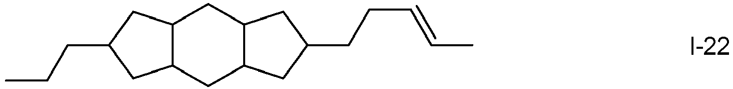

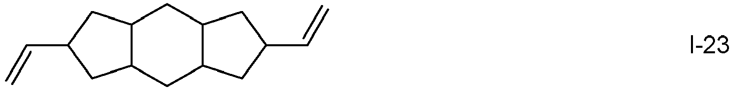

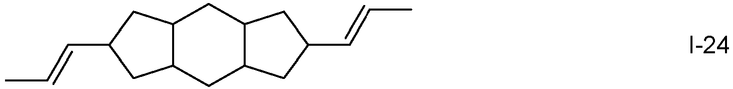

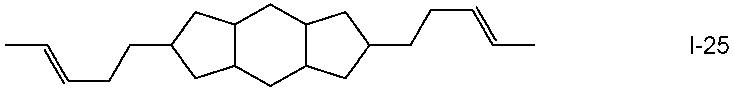

8. Process for the preparation of compounds of the formula I according to one or more of Claims 1 to 7, in which a compound of the formula II 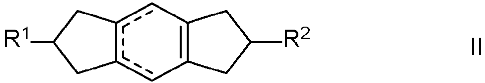
in which R¹ and R² are defined as for formula I in Claim 1,
is converted into a compound of the formula I by hydrogenation of the double bonds of the six-membered ring in the ring system of the formula II on a metal catalyst.

9. Use of one or more compounds of the formula I according to one or more of Claims 1 to 7 as component in a liquid-crystalline medium.

10. Liquid-crystalline medium comprising at least two mesogenic compounds, **characterised in that** it comprises at least one compound of the formula I according to one or more of Claims 1 to 7.

11. Use of the liquid-crystalline medium according to Claim 10 for electro-optical purposes.

12. Use of the liquid-crystalline medium according to Claim 10 for energy-saving applications.

13. Electro-optical liquid-crystal display containing a liquid-crystalline medium according to Claim 10.

## Revendications

1. Composés de formule I, 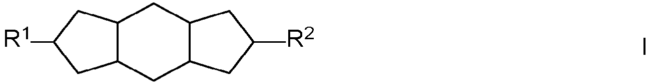 dans laquelle
R¹, R², dans chaque cas indépendamment, désignent alkyle ayant jusqu'à 8 atomes de carbone, où, de plus, un ou plusieurs groupements CH₂ dans ces radicaux, y compris les atomes de C terminaux, peuvent dans chaque cas, indépendamment les uns des autres, être remplacés par -CH=CH-, 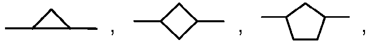 et où, de plus, un ou plusieurs atomes de H peuvent être remplacés par halogène.

2. Composés selon la revendication 1, **caractérisés en ce que**
R¹ désigne alkyle ou alcényle ayant jusqu'à 8 atomes de carbone.

3. Composés selon l'une ou plusieurs parmi les revendications 1 ou 2, **caractérisés en ce que** R¹ et R² sont identiques.

4. Composés selon l'une ou plusieurs parmi les revendications 1 ou 2, **caractérisés en ce que** R¹ et R² ne sont pas identiques.

5. Composés selon l'une ou plusieurs parmi les revendications 1 à 4, **caractérisés en ce que** R¹ désigne méthyle, éthyle, n-propyle, n-butyle ou n-pentyle.

6. Composés selon l'une ou plusieurs parmi les revendications 1 à 5, **caractérisés en ce que** R² désigne éthyle, n-propyle, n-butyle ou n-pentyle.

7. Composés selon l'une ou plusieurs parmi les revendications 1 à 6, choisis parmi les formules suivantes :

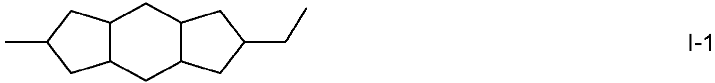

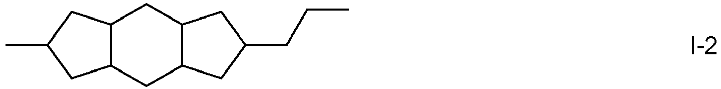

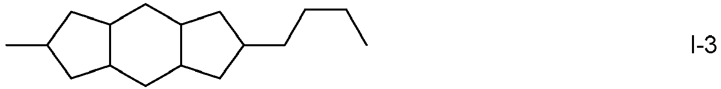

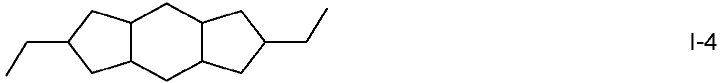

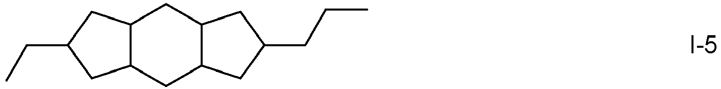

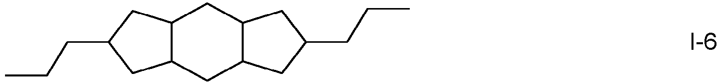

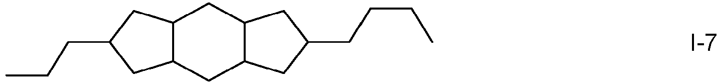

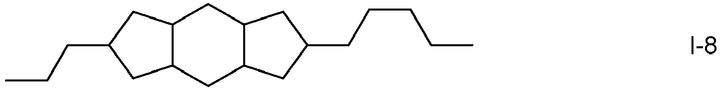

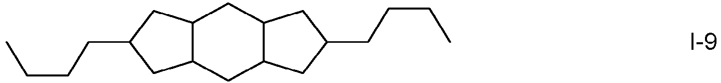

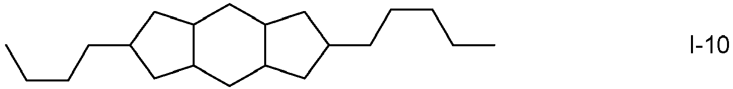

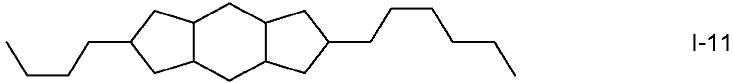

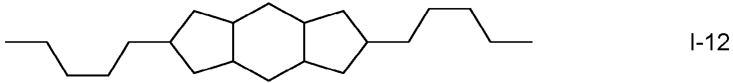

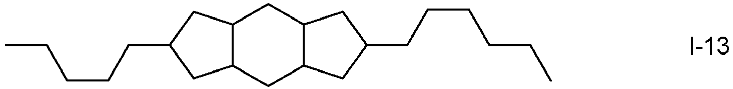

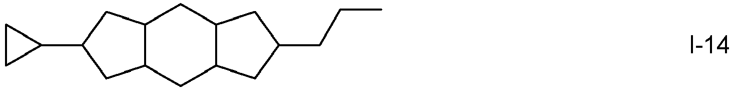

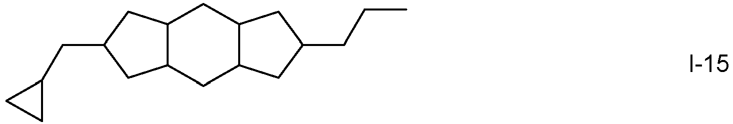

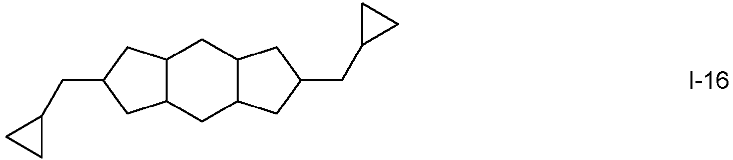

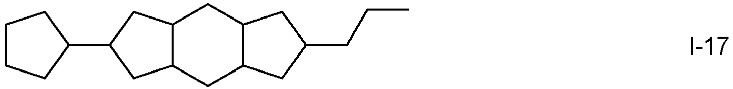

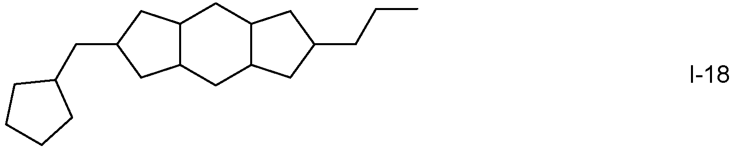

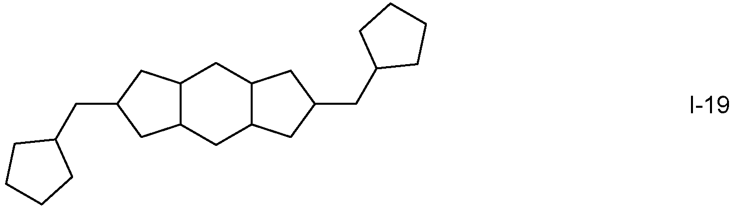

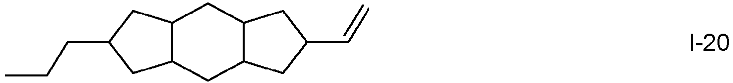

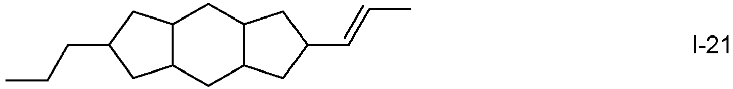

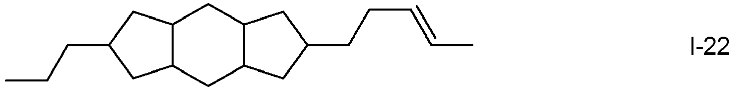

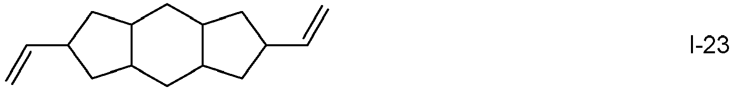

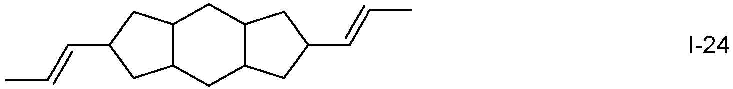

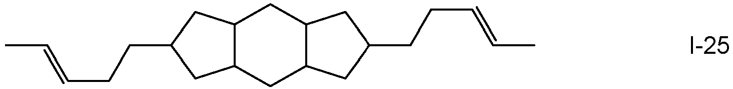

8. Procédé de préparation de composés de formule I selon l'une ou plusieurs parmi les revendications 1 à 7, dans lequel un composé de formule Il 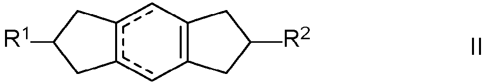
dans laquelle R¹ et R² sont tels que définis pour la formule I selon la revendication 1,
est converti en un composé de formule I par hydrogénation des doubles liaisons du cycle à six chaînons dans le noyau de formule Il sur un catalyseur métallique.

9. Utilisation d'un ou plusieurs composés de formule I selon l'une ou plusieurs parmi les revendications 1 à 7, comme composant dans un milieu cristallin liquide.

10. Milieu cristallin liquide comprenant au moins deux composés méso-gènes, **caractérisé en ce qu'**il comprend au moins un composé de formule I selon l'une ou plusieurs parmi les revendications 1 à 7.

11. Utilisation du milieu cristallin liquide selon la revendication 10, à des fins électro-optiques.

12. Utilisation du milieu cristallin liquide selon la revendication 10, pour des applications à économie d'énergie.

13. Affichage électro-optique à cristaux liquides contenant un milieu cristallin liquide selon la revendication 10.
